Europäisches Patentamt

European Patent Office

Office européen des brevets

(19)

(11) Publication number: **0 337 279 B1**

## EUROPEAN PATENT SPECIFICATION

(12)

(45) Date of publication of patent specification: **15.09.93**   (51) Int. Cl.5: **B60C 1/00**, B60C 5/14

(21) Application number: **89105983.4**

(22) Date of filing: **05.04.89**

(54) **Improved gas barrier structure for pneumatic articles.**

(30) Priority: **11.04.88 US 180925**

(43) Date of publication of application:
**18.10.89 Bulletin 89/42**

(45) Publication of the grant of the patent:
**15.09.93 Bulletin 93/37**

(84) Designated Contracting States:
**AT DE ES FR GB IT LU NL SE**

(56) References cited:
**FR-A- 2 297 739**
**GB-A- 2 023 516**
**US-A- 4 287 928**
**US-A- 4 549 593**

**C.A. FINCH: "POLYVINYL ALCOHOL" no
LT1491, 10 December 1973, J WILEY & SONS,
LONDON,**

(73) Proprietor: **HERCULES INCORPORATED**
**Hercules Plaza**
**Wilmington Delaware 19894(US)**

(72) Inventor: **Lin, Kuang Farn**
**20 Fox Hill Lane Wooddale**
**Wilmington Delaware 19807(US)**
Inventor: **Klosiewicz, Daniel William**
**213 Sheldon Drive Drummond Hill Apartments**
**Newark Delaware 19711(US)**

(74) Representative: **Lederer, Franz, Dr. et al**
**Lederer, Keller & Riederer Patentanwälte**
**Lucile-Grahn-Strasse 22**
**D-81675 München (DE)**

EP 0 337 279 B1

**Description**

This invention relates to gas barrier structures for pneumatic articles, such as innerliners for tubeless pneumatic tires.

In most pneumatic articles, for instance, blimps or tires for vehicles or aircraft, weight is an important consideration. Gas barrier structures for such articles, are conventionally based on butyl rubber or a halobutyl rubber, typically chlorobutyl. In order to give satisfactory air-pressure retention, the thickness of a halobutyl rubber-based gas barrier, such as the tire innerliner for a passenger car or light truck, has to be on the order of about 1.5 mm (60 mils). Such a liner has an air permeance of about 230 $cc/m^2/atm/day$ at 65°C. For a good quality 38 cm (15 in) passenger-car tire the liner weighs about 1.13 kg (2.5 lbs), which is about 10% of the total weight of the tire. US-A-4 287 928 discloses puncture-sealing pneumatic tubeless tires having on the inner face of the tire a liner composed of a rubber material such as butyl rubber, or halogenated butyl rubber and blends thereof.

Pneumatic tires typically comprise several plies of reinforced rubber permanently laminated by molding and curing, the innerliner (also called the liner or liner ply) being the inner-most layer and having lower air-permeability than the rubber employed in the other layers.

In the case of vehicles, the fuel economy of the tires of a vehicle is primarily determined by its rolling resistance. When a vehicle is running, all of the components in the tires are flexing at a high frequency. A significant amount of energy is lost by the heat generated in the tire due to hysteresis, which is determined by the nature and the mass of the tire components. Therefore, it is highly desirable to achieve a reduction in the mass of any of the components, while maintaining its functional performance, to reduce its share of the energy loss and result in an improvement of fuel economy and tire performance.

Tire rolling resistance is also affected by its inflation pressure. An increase in tire pressure would also reduce rolling resistance. However, with a halobutyl rubber innerliner, such a higher pressure can be maintained only by a thicker and heavier liner. The added weight of a thicker liner would increase the hysteresis loss, which would more than offset the gain from the higher air pressure for improving fuel economy that would be achieved by improving the air barrier property of the innerliner.

While butyl and halobutyl rubbers have the best air-barrier characteristics among elastomers, other materials not considered to be elastomers possess much better air-barrier properties. For example, films made of thermoplastic polymers, such as vinylidene chloride based polymers (PVDC) and ethylene-vinyl alcohol copolymers (EVOH), have air permeabilities that are only a fraction of a percent of the permeability of a typical butyl rubber film of the same thickness. Although these barrier materials are well known in applications such as food packaging that benefit from low air-permeability, they have not been successfully used in the construction of vehicle tires or other articles having similar functionality and requirements for production.

Using those known barrier materials in tire construction, for instance, would be considered to be impractical for several reasons. Being thin films, handling them without creating wrinkles or other defects is difficult, and since the preferred barrier materials are thermoplastics, they might be expected to melt or degrade at tire-curing temperatures, which may range from 120 to 200°C. Also, normal service on a vehicle might be expected to distort such non-elastomeric films beyond their elastic limits as indicated by their manufacturers' elongation-to-break specifications.

GB-A-2 023 516 discloses pneumatic tubes and tyres for vehicles, especially inner tubes for a pedal cycle having as coating on its inner surface a plastic material, like polyvinyl chloride, mylar, nylon or polyvinylidene chloride which is applied in the form of a solution, dispersion or emulsion on the inner or outer surface cf the tube.

According to the invention, a gas barrier structure for pneumatic articles, comprising a gas barrier film having low gas permeability, is characterized in that the gas barrier film is laminated between and bonded to two vulcanizable elastomeric surface layers and is a non-elastomeric polymeric layer that has an air permeability (P) of no more than $0.05 \times 10^{-10}$ $cc\text{-}cm/cm^2\text{-}cmHg\text{-}sec$ (0.05 Barrer or 16.6 $cc\text{-}mil/100$ $in^2\text{-}atm\text{-}day$) at 23°C.

The gas barrier structures according to the invention combine substantially higher levels of gas-pressure retention with a substantial reduction in weight per unit area, as compared to conventional butyl or halobutyl rubber innerliner materials. The air permeability of butyl or halobutyl rubber (the best of the standard materials for current commercial tire innerliners) is about $0.5 \times 10^{-10}$ $cc\text{-}cm/cm^2\text{-}cmHg\text{-}sec$, so that layer of the non-elastomeric polymeric barrier layer material one micrometer (1 mil) thick in the gas barrier structure of this invention may be equivalent in air permeability to ten or more times that thickness of butyl rubber.

Incorporation of the thin non-elastomeric polymeric layer film barrier material into a laminate with the rubber surface layers overcomes in several ways the perceived disadvantages of barrier materials that are well known in such applications as food packaging. Firstly, it creates a gas barrier structure of increased bulk and body as compared to a layer of the non-elastomeric film barrier material, which facilitates handling without creating wrinkles or other defects.

Secondly, the rubber surface layers protect and preserve the thin film barrier materials, which are thermoplastic materials that may soften or even melt at curing temperatures. The bonding to the rubber surface layers maintains the dimensional integrity of the thermoplastic material even under those conditions, restraining any tendency to flow and permitting re-solidification without dimensional change at a lower temperature.

Thirdly, rubber surface layers tend to insulate the thermoplastic material from the higher curing temperatures, thus minimizing thermal degradation of the thermoplastic, a particular advantage in the case of PVDC polymers. In the case of an EVOH barrier layer, the rubber layers protect the barrier layer from moisture, to which the EVOH polymers are sensitive.

Finally, the bonding to the rubber surface layers overcomes the disadvantages caused by the difference in elasticity between the elastomeric materials and the non-elastomeric films. Rubber, as is well known, is a highly elastic material, and can be elongated by several hundred percent without exceeding its elastic limit. This quality is the principal reason that rubber is used in tires, since it allows a tire to withstand the extremely rough treatment that it receives in everyday usage. The non-elastomeric barrier films, by contrast, have relatively low elastic limits. Either normal service on a vehicle or inflation may distort the film beyond its elastic limit. When the film is bound between the rubber layers, the barrier layer can be stretched beyond its normal elastic limit along with the rubber surface layers. In that case, when the laminate returns to its original dimensions, the barrier material is forced into a folded, sinusoidal configuration with the interior surface of the rubber layers following the folds in the barrier material and the integrity of the innerliner structure is maintained. The gas barrier film is also protected from abrasion and breakage by being enclosed between the rubber layers.

For non-tire applications where a thin rubbery material with high gas barrier property is required, the gas barrier structures have adequate flexibility and extensibility to meet the requirements for inflation and use, and are able to withstand the conditions required for vulcanization.

For use as vehicle-tire innerliners, the structures according to the invention have adequate flexibility and extensibility to meet the requirements in use of tubeless pneumatic tires and are able to withstand the conditions required for the fabrication and vulcanization of the tires, including ensuring the bonding of the outer elastomeric surface layer to the other rubbers used in the adjacent layer.

The gas barrier material can be selected from a wide variety of non-elastomeric materials as long as the material has the specified air permeability limits (no greater than $0.05 \times 10^{-10}$ cc-cm/cm$^2$-cmHg-sec (16.6 cc-mil/100 in$^2$-atm-day) at 23 °C).

Examples of thin film barrier materials that meet the above mentioned requirements are as follows:

## GAS PERMEABILITY IN BARRIERS AT 23°C

| Materials | Melting and Softening Points(°C) | $O_2$ | $N_2$ | $CO_2$ | He | Air(Calc.) |
|---|---|---|---|---|---|---|
| EVAL® EP-F EVOH | -181(a) | $6.02 \times 10^{-5}$ | $6.02 \times 10^{-6}$ | $1.93 \times 10^{-4}$ | 0.06 | $1.81 \times 10^{-5}$ |
| " EP-H " | -175 | $1.81 \times 10^{-4}$ | $2.41 \times 10^{-5}$ | $4.04 \times 10^{-3}$ | 0.1 | $5.42 \times 10^{-5}$ |
| " EP-E | -164 | $5.48 \times 10^{-4}$ | $4.82 \times 10^{-5}$ | $1.29 \times 10^{-3}$ | 0.14 | $1.51 \times 10^{-4}$ |
| Saran® 5253 PVDC | -165(a) | $9.04 \times 10^{-4}$ | $7.23 \times 10^{-5}$ | $1.99 \times 10^{-3}$ | 0.16 | $2.41 \times 10^{-5}$ |
| Barex® 210 Nitrile | -170(a,b,c) | $4.82 \times 10^{-3}$ | | $6.63 \times 10^{-3}$ | | |
| | | | | | | |
| Nylon 6 (a) | -216 | $1.57 \times 10^{-2}$ | $5.42 \times 10^{-3}$ | $2.83 \times 10^{-2}$ | | $7.47 \times 10^{-3}$ |
| Amorphous nylon | -200(c) | $1.20 \times 10^{-2}$ | | | | |
| PET polyester | -258(b) | $3.01 \times 10^{-2}$ | | | | |
| | | | | | | |
| For comparison: | | | | | | |
| Natural rubber(e) | | 23.2 | 8.05 | 131.1 | 31.2 | 11.1 |
| Butyl rubber(e) | | 1.30 | 0.33 | 5.16 | 8.42 | 0.52 |
| Polyepichlorohydrin(e) | | 0.31 | 0.047 | 3.41 | 1.74 | 0.1 |
| Oriented PP(b) | | 0.98 | | | | |

(a) Data from Technical Bulletin No. 110, "Gas Barrier Properties of Eval Resins," p. 2, Table 1, Kuraray Co., Tokyo.
(b) Data from "Packaging Encyclopedia & Yearbook 1985," pp. 64F-65, Cahners Publishing Co., Denver, CO.
(c) Data from Technical Bulletin E-73974, "Selar PA 3426 Barrier Resin," DuPont Company, Wilmington, DE.
(d) Modern Plastics Encyclopedia.
(e) Data from "Rubber Handbook," p. 284, Table 6, R. T. Vanderbilt Co., Norwalk, CT.

Vinylidene-chloride-based polymers applicable in this invention as the gas-barrier material can be a copolymer of vinylidene chloride (VDC) with one or more comonomers including, but not limited to, vinyl chloride, acrylonitrile, acrylates, methacrylates, and the acrylic acids. Some of these materials are listed above, including those sold under the trademark "Saran" by Dow Chemical Company, Midland, Michigan.

The best barrier properties are achieved with higher concentrations of VDC, while better flexibility is usually associated with a lower VDC content in the polymer. Preferred are polymers having 60 to 95% VDC.

Ethylene-vinyl-alcohol copolymers useful as the gas-barrier material are saponification products of ethylene-vinyl acetate copolymers. Better barrier properties are achieved with higher vinyl alcohol content, i.e., lower ethylene content and higher degree of saponification of the vinyl acetate moieties in the copolymer. Some of these materials are listed above and are sold under the trademark "EVAL" by Kuraray Co., Ltd., Osaka, Japan. Preferred polymers contain less than 50 mole % ethylene and are more than 90% saponified.

Both the ethylene-vinyl alcohol copolymer and the vinylidene chloride based polymers are thermoplastic, film-forming polymers. Both are amenable to extrusion at reasonably low working temperatures. Preferably, the material used for the rubber surface layers of the laminate is calendered to the desired thickness and laminated to both sides of the thermoplastic polymer film to give an three-layer laminated sheet. Alternatively, the three-layer laminated sheet containing the barrier material layer may be prepared by conventional co-extrusion, in which all three layers are extruded simultaneously through a single die having three extrusion orifices.

Conventional additives, such as plasticizers, modifying resins, processing aids, etc. can be included therein. A processing aid such as a glycol or polyhydroxyl compound of 2-10% based on the weight of the copolymer is useful when the copolymer is an extrusion grade ethylene-vinyl alcohol copolymer.

The materials used for the rubber surface layers of the laminate can be any conventional elastomer, including thermoplastic elastomers with appropriate compounding. It is permissible, and may even be desirable, to apply rubber layers of different compositions to the opposite faces of the barrier layer, possibly for reasons of economics, availability, suitability for fabrication, or meeting other functional requirements. For tire innerliners the composition of the outer rubber surface layer at least must be selected to provide strong adhesion to the inner layer of the carcass as well as to the barrier layer.

Thermoplastic elastomers (TPE's) may be used for the rubber surface layers. The TPE's are more convenient to extrude into thin films than are the conventional elastomers that may also be used, such as SBR's or butyl and natural rubbers. However, the conventional elastomers are easier to calender. For tire innerliners, any TPE or conventional elastomer or a blend of both that gives the necessary adhesion to the carcass ply of the tire and the barrier material can be used to make the surface layers.

In an embodiment of the present invention the gas barrier structure for pneumatic articles has elastomeric surface layers which are composed of thermoplastic elastomers of a blend of a thermoplastic elastomer and another synthetic or natural elastomer.

In a preferred embodiment of the present invention the gas barrier structure is the inner liner of a vulcanized tubeless pneumatic vehicle tire in which one of the elastomeric surface layers is bonded to another elastomeric layer in the tire.

Styrene block-copolymer TPE's such as those sold under the trademark "Kraton" by Shell Chemical Company, polyolefin TPE's such as "Santoprene" by Monsanto Company, and polyester TPE's such as "Hytrel" by DuPont are examples of TPE's that work well.

The thermoplastic nature of TPE's may be retained for applications that do not involve exposure to temperatures high enough to cause softening. However, if the gas barrier structures according to the invention are to be used as tire innerliners, and in any case if conventional elastomers are used, appropriate vulcanizing agents should be incorporated in the elastomer surface layers. The vulcanizing agents will make TPE surface layers used in tire innerliners more adaptable for conventional tire making processes and improve adhesion to the inner layer of the carcass when the tire is cured. In any case, the air permeability of the non-elastomeric materials cited above for the polymeric layer is not affected by vulcanization.

The elastomer surface layers may of course be further compounded with reinforcing fillers such as carbon black, tackifying agents, plasticizers, and other well known modifiers to improve the physical properties of the surface layers.

Preferably, the bonding between adjacent layers in the laminated structure will be sufficiently strong to prevent delamination when the structure is tensile-stretched to 100 percent elongation in any direction. In many combinations of the gas barrier film and the material of the elastomeric surface layers, that degree of adhesion can be developed by the appropriate compounding of the elastomeric rubber material or the polymeric material of the non-elastomeric layer or both, or by a surface treatment of either or both of the layers.

Preferably, that degree of adhesion is achieved by incorporating in the material of the surface layers appropriate phenolic resins, which include both the heat-reactive types that are used as curing resins for butyl rubber and other elastomers (such as the "SP 1044" and "SP-1045" resins available from Schenectady Chemicals Co., Schenectady, New York) and the non-reactive type of phenolic tackifying resins, such as the "SP-1077" resins also available from Schenectady Chemicals Co.

For some combinations of layer materials, an adequate degree of adhesion between the rubber surface layers and the gas barrier film material layer can be achieved by applying an adhesive or tie layer between the layers. For a PVDC barrier layer and the rubber surface layers, a copolymer of ethylene and ethyl acrylate or other acrylate or methacrylate monomer (EEA resin) may be used in the tie layer. Preferably, the tie layer is a blend of EEA resin and styrene-isoprene or styrene-butadiene thermoplastic elastomers or the hydrogenated products thereof. The blending ratio can be in the range of about 10 to 90% of EEA, preferably between about 25 and 75% of EEA. The most preferred EEA resin contains about 70% ethylene.

For an EVOH barrier layer and the rubber surface layers, a blend of maleic anhydride grafted polypropylene and styrene-isoprene or styrene-butadiene thermoplastic elastomer or the hydrogenated products thereof may be used for the tie layer. The blending ratio can be in the range of about 5 to 95%, preferably from 10 to 50%, of the grafted polypropylene. The maleic anhydride content of the grafted polypropylene is preferably from about 0.05 to 5%, more preferably 0.1 to 4%.

The improved properties of tires the gas barrier structures according to the invention are demonstrated by the following examples. Parts and percentages are by weight unless otherwise specified.

Example 1

An improved innerliner in accordance to this invention was fabricated by coextruding a 5-layer sheet in ABCBA order of lamination. Layer A, the surface layer, had the following ingredients:

| | |
|---|---|
| Block copolymer TPE[1] | 100.0 parts |
| Stearic acid | 1.0 parts |
| Hydroquinoline antioxidant[2] | 1.0 parts |
| Zinc oxide | 1.5 parts |
| Carbon black N550 | 20.0 parts |
| Hydrocarbon Resin[3] | 20.0 parts |
| Vulcanization accelerator[4] | 0.3 parts |
| vulcanizing agent[5] | 2.0 parts |
| Sulfur | 0.3 parts |

1. Kraton 1117 by Shell Chemical Co.
2. Agerite Resin D by R. T. Vanderbilt Co.
3. Piccopale 100 by Hercules.
4. Santocure by Monsanto Company.
5. Sulfasan R by Monsanto Company.

The mixture was prepared in a manner standard to the rubber industry, using a Banbury mixer, a 2-roll mill, and other auxiliary equipment.

Layer B, a tie layer, had the following ingredients:

| | |
|---|---|
| Hydrogenated styrenic block TPE | 60.0 parts |
| EEA Resin (DPD-6169 from Union Carbide) | 40.0 parts |

Pellets of both these components were thoroughly blended in a V-blender.

Component C is an extrusion-grade PVDC resin (available under the registered trademark Saran from Dow Chemical Co.).

These three components were fed from separate extruders into a 5-layer feed block where components A and B were each split into two streams. Thereafter, the layers, still maintaining their identity, were extruded through a common die into the 5-layer composite sheet (A,B,C,B,A), which was quenched on a chill roll. The thickness of the layers was controlled by adjusting the throughput rate of the individual extruders feeding into the feed block. The resultant layer thicknesses were 7, 1, 2, 1, and 7 mils respectively for A, B, C, B, and A.

The sheet was found to have excellent air barrier properties. Its air permeance is 155 $cc/m^2/atm/day$, which is significantly lower than the 194 $cc/m^2/atm/day$ air permeance of a typical commercial chlorobutyl rubber based innerliner at 60 mils thick. The sheet was rubbery and stretchable. It was found that after being stretched to 200% enlongation, and released, the sheet specimen substantially recovered its original dimensions. More importantly, the air permeability of the sheet had not changed. Upon examining the cross-section of the specimen under a scanning electron microscope, it was found that the barrier layer had been forced into a folded, sinusoidal, or a "micro-corrugated" configuration with the interior surface of the rubber skins following the contour of the barrier layer and maintaining the integrity of the laminate structure.

The laminate was used as a direct replacement of the conventional innerliner of a tubeless 15-inch light truck tire in a standard tire making operation. It exhibited excellent tack to the carcass ply, and there was no difficulty through the entire tire-making process. The resultant tire (tire A) satisfactorily passed the standard air pressure retention test by retaining more than 98% of the 310 kPa (45 psig) pressure in a constant (23°C) temperature room for 2 weeks. A commercial tire (tire C) made with the standard liner was used as the control. It also showed a 98% pressure retention over the same 2-week period. The inner-liner sheet of this invention for the 15 inch light truck (tire A) weighed 0.43 kg (0.95 pounds) while the standard halobutyl interliner of the conventional 15 inch commercial tire (tire C) weighed 1.35 kg (2.97 pounds).

Separately, the sheet was modified to give a micro-corrugated barrier layer by mechanically stretching it to 200% elongation and then relaxing it, and was used to make tires (tire B) as above. The tires were found to retain 99%. of the 45 psig air pressure over the 2-week period.

Example 2

The liner in accordance to this invention of a three layer laminated sheet of A-C-A structure was prepared.

Component A is the surface layer which had the following ingredients::

| | |
|---|---|
| Block copolymer TPE[1] | 100.0 parts |
| Stearic acid | 1.5 parts |
| Age Rite Resin D | 1.0 parts |
| Zinc oxide | 1.5 parts |
| Carbon black | 25.0 parts |
| Piccopale 100 resin | 15.0 parts |
| Phenolic resin, heat-reactive[2] | 5.0 parts |
| Phenolic resin, non-heat-reactive[3] | 3.0 parts |
| Santocure | 0.3 parts |
| Sulfasan R | 4.0 parts |
| Sulfur | 0.3 parts |

1. Kraton 1117.
2. Schenectady SP-1045 by Schenectady Chemicals Company.
3. Schenectady SP-1077 by Schenectady Chemicals Company.

The mixture was compounded in a manner standard to the rubber industry, using a Banbury mixer, a 2-roll mill, and other auxiliary equipment.

Component C, the barrier layer, is an extrusion grade ethylene-vinyl alcohol (EVOH) copolymer resin (EVAL-G from the Kuraray Co., Ltd.), further modified with 4% of ethylene glycol based on the weight of the EVOH resin to improve processibility.

These two components were coextruded from separate extruders through a 3-layer feed block. Component A was split into two streams to form the surface layers sandwiching the barrier layer C. Thereafter, the layers converged but maintained their identity, and were extruded through a common die set at the desired die gap clearance into a 3-layer composite sheet. The thickness of the layers was controlled by adjusting the throughput rate of the individual extruders. The resultant layer thickness was 0.229, 0.025, and 0.229 mm (9, 1, and 9 mils) respectively for A, C, and A.

The sheet was found to have excellent air barrier properties. Its air permeance is 49.6 cc/m$^2$/atm/day at 65.5°C which is much lower than that of a typical premium grade commercial innerliner of 1.4 mm (55 mil) halobutyl rubber at 210.8 cc/m$^2$/atm/day. A sample of the sheet was stretched to 150% elongation, which far exceeds the elongation to be endured by the innerliner in tire-making process or during the use of tires. After the stress was released, the sheet substantially recovered its original overall dimensions. The air permeance was found to be 57.4 cc/m$^2$/atm/day at 65.5°C., thus ensuring that excellent air barrier properties will be achieved with this material as tire innerliner.

Example 3

An innerliner similar to that in Example 2 of a three layer laminated sheet of A-C-A structure was prepared. Component A is the surface layer and had the following ingredients:

| | |
|---|---|
| Block copolymer TPE (1) | 100.0 parts |
| Stearic acid | 1.5 parts |
| Age Rite Resin D | 1.0 parts |
| Zinc oxide | 1.5 parts |
| Carbon black | 35.0 parts |
| Piccopale 100 Resin | 15.0 parts |
| Phenolic resin, heat-reactive (2) | 5.0 parts |
| Phenolic resin, non-heat-reactive (3) | 3.0 parts |
| Santocure | 0.3 parts |
| Sulfasan R | 3.0 parts |
| Sulfur | 0.3 parts |

(1) Kraton 1117.
(2) Schenectady SP-1045.
(3) Schenectady SP-1077.

The mixture was compounded in the standard manner as described before.

Component C, the barrier layer, was a 0.20 mm (0.8 mil) thick extruded film of an ethylene-vinyl alcohol (EVOH) copolymer resin (EVAL-E from the Kuraray Co.).

Component A was calendered on a 3-roll calender to about 0.305 mm (12 mils) in thickness and laminated to both sides of component C to give the A-C-A three layer laminated sheet. The over-all thickness was about 25 mils.

The air permeance of the 0.636 mm (25-mil) sheet was 51.3 cc/m$^2$/atm/day at 150°F (65.5°C), which is only one-fourth of that of a 55-mil premium grade halobutyl rubber inner liner at 210.8 cc/m$^2$/atm/day under the same testing conditions. The halobutyl innerliner for a 13 inch tubeless tire weighed 2.02 pounds while the same size innerliner of the instant invention weighed only 0.73 pounds representing a 63.8% weight reduction.

The sheet was successfully used as a direct replacement of the conventional innerliner of a 13-inch tubeless passenger car tire. The resultant tire passed the standard air pressure retention test by retaining 99% of the 45 psi. initial pressure over the two week test period.

While multi-layer coextrusion and calendering were used to fabricate the innerliner in the above examples, they are not the only methods applicable. Extrusion coating, lamination and other techniques effective in making multi-layer sheet structures can also be used.

**Claims**

1. A gas barrier structure for pneumatic articles, comprising a gas barrier film having low gas permeability, is characterized in that the gas barrier film is laminated between and bonded to two elastomeric surface layers and is a non-elastomeric polymeric layer that has an air permeability of no more than 0.05 x 10$^{-10}$cc-cm/cm$^2$-cmHg-sec at 23°C.

2. A gas barrier structure for pneumatic articles, as claimed in claim 1, further characterized in that a phenolic resin is incorporated in the material of the surface layers.

3. A gas barrier structure for pneumatic articles, as claimed in claim 1, further characterized in that a tie layer is laminated between and bonded to the gas barrier film and each of the elastomeric surface layers.

4. A gas barrier structure for pneumatic articles, as claimed in claim 1 or 2, further characterized in that the gas-barrier film is a copolymer of vinylidene chloride (VDC).

5. A gas barrier structure for pneumatic articles, as claimed in claim 4, further characterized in that the gas-barrier film contains 60 to 95% of the VDC moity.

**6.** A gas barrier structure for pneumatic articles, as claimed in claim 4 or 5, further characterized in that a tie layer consisting of a blend of ethylene and ethyl acrylate or other acrylate or methacrylate monomer resin and either a styrene-isoprene or a styrene-butadiene thermoplastic elastomer or its hydrogenated product is laminated between and bonded to the gas barrier film and each of the elastomeric surface layers.

**7.** A gas barrier structure for pneumatic articles as claimed in claim 1 or 2, further characterized in that the gas-barrier film is a copolymer of ethylene and vinyl-alcohol (EVOH).

**8.** A gas barrier structure for pneumatic articles as claimed in claim 7, further characterized in that the gas-barrier film contains less than 50 mole % of ethylene, more than 90% of the EVOH being a saponification product of ethylene-vinyl acetate.

**9.** A gas barrier structure for pneumatic articles as claimed in claim 7 or 8, further characterized in that the EVOH contains 2-10%, based on the weight of the copolymer, of a glycol or polyhydroxyl compound as a processing aid.

**10.** A gas barrier structure for pneumatic articles, as claimed in claim 7, 8 or 9, further characterized in that a tie layer consisting of a blend of maleic anhydride-grafted polypropylene and a styrene-isoprene or styrene-butadiene thermoplastic elastomer or the hydrogenated product of either is laminated between and bonded to the gas barrier film and each of the elastomeric surface layers.

**11.** A gas barrier structure for pneumatic articles as claimed in any of the preceeding claims, further characterized in that the elastomeric surface layers are composed of thermoplastic elastomers or a blend of a thermoplastic elastomer and another synthetic or natural elastomer.

**12.** A gas barrier structure for pneumatic articles as claimed in claim 11, further characterized in that the elastomeric surface layers comprises a styrene block-copolymer thermoplastic elastomer.

**13.** A gas barrier structure for pneumatic articles as claimed in any of the preceeding claims, further characterized in that the bonding between adjacent layers in the laminated structure prevents delamination when the structure is tensile-stretched to 100 percent elongation in any direction.

**14.** A gas barrier structure for pneumatic articles as claimed in any of the preceeding claims, further characterized in that a vulcanizing agent is incorporated in the elastomeric surface layers.

**15.** A gas barrier structure for pneumatic articles as claimed in claim 14, further characterized in that it is the innerliner of a vulcanized tubeless pneumatic vehicle tire in which one of the elastomeric surface layers is bonded to another elastomeric layer in the tire.

**16.** A method for making the gas barrier structure as claimed in any of the preceeding claims, characterized in that the thermoplastic polymer film and the sheets of the material used for the elastomeric surface layers are respectively prepared by extrusion or calendering to the desired thickness and the layers are laminated together to make a three-layer laminated sheet.

**17.** A method for making the gas barrier structure as claimed in claim 16, further characterized in that the laminated sheet is elongated beyond the elastic limit of the thermoplastic polymer film and allowed to relax to its original dimension, and is then incorporated into a tubeless pneumatic vehicle tire, and the sheet is vulcanized with the tire.

**18.** Use of a gas barrier structure according to any one of claims 1-15 in the manufacture of a tubeless pneumatic vehicle tire.

**19.** Tubeless pneumatic vehicle tire containing a gas barrier structure according to any one of claims 1-15.

EP 0 337 279 B1

**Patentansprüche**

1. Gas-Sperrschicht-Struktur für pneumatische Artikel, welche einen Gas-Sperrschichtfilm von niedriger Gasdurchlässigkeit umfaßt, dadurch gekennzeichnet, daß der Gas-Sperrschichtfilm zwischen zwei elastomeren Oberflächenschichten laminiert und mit denselben verbunden ist, und daß dieser Gas-Sperrschicht-film eine nicht-elastomere Polymerschicht ist, welche eine Luftdurchlässigkeit von nicht mehr als $0,05 \times 10^{-10}$ cm$^3$-cm/cm$^2$-cmHg-s bei 23°C aufweist.

2. Gas-Sperrschicht-Struktur für pneumatische Artikel, wie im Anspruch 1 beansprucht, welche weiterhin dadurch gekennzeichnet ist, daß dem Material der Oberflächenschichten ein Phenolharz einverleibt worden ist.

3. Gas-Sperrschicht-Struktur für pneumatische Artikel, wie im Anspruch 1 beansprucht, welche weiterhin dadurch gekennzeichnet ist, daß eine Bindemittelschicht zwischen dem Gas-Sperrschichtfilm und jeder der elastomeren Oberflächenschichten laminiert und mit denselben verbunden ist.

4. Gas-Sperrschicht-Struktur für pneumatische Artikel, wie im Anspruch 1 oder 2 beansprucht, welche weiterhin dadurch gekennzeichnet ist, daß der Gas-Sperrschichtfilm ein Copolymer von Vinylidenchlorid (VDC) ist.

5. Gas-Sperrschicht-Struktur für pneumatische Artikel, wie im Anspruch 4 beansprucht, welche weiterhin dadurch gekennzeichnet ist, daß der Gas-Sperrschichtfilm 60 bis 95 % von dem VDC-Rest enthält.

6. Gas-Sperrschicht-Struktur für pneumatische Artikel, wie im Anspruch 4 oder 5 beansprucht, welche weiterhin dadurch gekennzeichnet ist, daß eine Bindemittelschicht, welche aus einem Gemisch aus einem Harz aus Ethylen und Ethylacrylat oder einem anderen Acrylat- oder Methacrylatmonomer und entweder einem thermoplastischen Styrol-Isopren- oder Styrol-Butadien-Elastomer oder dessen hydriertem Produkt besteht, zwischen dem Gas-Sperrschichtfilm und jeder der elastomeren Oberflächenschichten laminiert und mit denselben verbunden ist.

7. Gas-Sperrschicht-Struktur für pneumatische Artikel, wie im Anspruch 1 oder 2 beansprucht, welche weiterhin dadurch gekennzeichnet ist, daß der Gas-Sperrschichtfilm ein Copolymer von Ethylen und Vinyialkohol (EVOH) ist.

8. Gas-Sperrschicht-struktur für pneumatische Artikel, wie im Anspruch 7 beansprucht, welche weiterhin dadurch gekennzeichnet ist, daß der Gas-Sperrschichtfilm weniger als 50 Mol-% Ethylen und mehr als 90 % an dem EVOH enthält, welches letztgenannte ein Verseifungsprodukt von Ethylen-Vinylacetat ist.

9. Gas-Sperrschicht-Struktur für pneumatische Artikel, wie im Anspruch 7 oder 8 beansprucht, welche weiterhin dadurch gekennzeichnet ist, daß das EVOH 2 bis 10 %, bezogen auf das Gewicht des Copolymers, eines Glykols oder einer Polyhydroxylverbindung als Verarbeitungshilfsmittel enthält.

10. Gas-Sperrschicht-Struktur für pneumatische Artikel, wie im Anspruch 7, 8 oder 9 beansprucht, welche weiterhin dadurch gekennzeichnet ist, daß eine Bindemittelschicht, welche aus einem Gemisch aus einem mit Maleinsäureanhydrid gepfropftem Polypropylen und einem thermoplastischen Styrol-Isopropen- oder Styrol-Butadien-Elastomer oder dem hydrierten Produkt von dem einen oder dem anderen oder von beiden dieser letztgenannten Elastomeren besteht, zwischen dem Gas-Sperrschicht-film und jeder der elastomeren Oberflächenschichten laminiert und mit denselben verbunden ist.

11. Gas-Sperrschicht-Struktur für pneumatische Artikel, wie in irgendeinem der vorhergehenden Ansprüche beansprucht, welche weiterhin dadurch gekennzeichnet ist, daß die elastomeren Oberflächenschichten aus thermoplastischen Elastomeren oder aus einem Gemisch eines thermoplastischen Elastomers mit einem anderen synthetischen oder natürlichen Elastomer bestehen.

12. Gas-Sperrschicht-Struktur für pneumatische Artikel, wie im Anspruch 11 beansprucht, welche weiterhin dadurch gekennzeichnet ist, daß die elastomeren Oberflächenschichten ein thermoplastisches Elastomer aus einem Styrol-Blockcopolymer enthalten.

**13.** Gas-Sperrschicht-Struktur für pneumatische Artikel, wie in irgendeinem der vorhergehenden Ansprüche beansprucht, welche weiterhin dadurch gekennzeichnet ist, daß durch das Binden zwischen benachbarten Lagen in der Laminatstruktur ein Aufblättern verhindert wird, wenn die Struktur in irgendeiner Richtung der Einwirkung einer eine 100 %ige Dehnung bewirkenden Zugspannung ausgesetzt ist.

**14.** Gas-Sperrschicht-Struktur für pneumatische Artikel, wie in irgendeinem der vorhergehenden Ansprüche beansprucht,welche weiterhin dadurch gekennzeichnet ist, daß die elastomeren Oberflächenschichten ein Vulkanisierungsmittel enthalten.

**15.** Gas-Sperrschicht-Struktur für pneumatische Artikel, wie im Anspruch 14 beansprucht, welche weiterhin dadurch gekennzeichnet ist, daß sie die Zwischenlage eines vulkanisierten, schlauchlosen Fahrzeug-Luftreifens ist, in welchem eine der elastomeren Oberflächenschichten an eine andere elastomere Schicht in dem Reifen gebunden ist.

**16.** Verfahren zur Herstellung der Gas-Sperrschicht-Struktur nach einem der vorhergehenden Ansprüche, dadurch gekennzeichnet, daß der thermoplastische Polymerfilm bzw. die Bahnen des für die elastomeren Oberflächenschichten verwendeten Materials durch Strangpressen bzw. Kalandrieren auf die gewünschte Dicke hergestellt werden, und daß die Schichten zur Erzielung einer dreilagigen, laminierten Bahn miteinander laminiert werden.

**17.** Verfahren zur Herstellung der Gas-Sperrschicht-Struktur nach Anspruch 16, welches weiterhin dadurch gekennzeichnet ist, daß die laminierte Bahn über die Elastizitätsgrenze des thermoplastischen Polymerfilms hinaus gedehnt und auf ihre ursprünglichen Abmessungen entspannen gelassen wird, und daß sie dann in einen schlauchlosen Fahrzeug-Luftreifen eingebracht wird, wonach die Bahn mit dem Reifen vulkanisiert wird

**18.** Verwendung einer Gas-Sperrschicht-Struktur nach einem der Ansprüche 1 bis 15 zur Herstellung eines schlauchlosen Fahrzeug-Luftreifens.

**19.** Schlauchloser Fahrzeug-Luftreifen, welcher eine Gas-Sperrschicht-Struktur nach einem der Ansprüche 1 bis 15 enthält.

**Revendications**

**1.** Structure-barrière vis-à-vis du gaz pour des produits pneumatiques, comprenant un film-barrière vis-à-vis du gaz ayant une faible perméabilité au gaz, caractérisée en ce que le film-barrière vis-à-vis du gaz est stratifié entre deux couches à surface élastomère, est lié à ces deux couches, et est une couche de polymère non élastomère qui a une perméabilité à l'air non supérieure à 0,05 x $10^{-10}$ cm$^3$.cm/cm$^2$.cmHg.s à 23 ° C.

**2.** Structure-barrière vis-à-vis du gaz pour des produits pneumatiques selon la revendication 1, caractérisée en ce qu'une résine phénolique est incorporée dans la matière des couches de surface.

**3.** Structure-barrière vis-à-vis du gaz pour des produits pneumatiques selon la revendication 1, caractérisée en ce qu'une couche de liaison est stratifiée entre le film-barrière vis-à-vis du gaz et chacune des couches à surface élastomère, et liée à ceux-ci.

**4.** Structure-barrière vis-à-vis du gaz pour des produits pneumatiques selon la revendication 1 ou 2, caractérisée en ce que le film-barrière vis-à-vis du gaz est un copolymère de chlorure de vinylidène (VDC).

**5.** Structure-barrière vis-à-vis du gaz pour des produits pneumatiques selon la revendication 4, caractérisée en ce que le film-barrière vis-à-vis du gaz contient 60 à 95% de fragments de VDC.

**6.** Structure-barrière vis-à-vis du gaz pour des produits pneumatiques selon la revendication 4 ou 5, caractérisée en ce qu'une couche de liaison consistant en un mélange d'éthylène, de résine d'acrylate d'éthyle ou d'un autre monomère acrylate ou méthacrylate, et d'un élastomère thermoplastique de stryrène-isoprène ou de styrène-butadiène, ou d'un produit hydrogéné de cet élastomère, est stratifiée entre le film-barrière vis-à-vis du gaz et chacune des couches à surface élastomère, et liée à ceux-ci.

7. Structure-barrière vis-à-vis du gaz pour des produits pneumatiques selon la revendication 1 ou 2, caractérisée en ce que le film-barrière vis-à-vis du gaz est un copolymère d'éthylène et d'alcool vinylique (EVOH).

8. Structure-barrière vis-à-vis du gaz pour des produits pneumatiques selon la revendication 7, caractérisée en ce que le film-barrière vis-à-vis du gaz contient moins de 50% en mole d'éthylène, plus de 90% de l'EVOH étant un produit de saponification d'éthylène-acétate de vinyle.

9. Structure-barrière vis-à-vis du gaz pour des produits pneumatiques selon la revendication 7 ou 8, caractérisée en ce que l'EVOH contient 2 à 10% par rapport au poids du copolymère, d'un glycol ou d'un composé polyhydroxylé en tant qu'auxiliaire de mise en oeuvre.

10. Structure-barrière vis-à-vis du gaz pour des produits pneumatiques selon la revendication 7, 8 ou 9, caractérisée en ce qu'une couche de liaison consistant en un mélange de polypropylène greffé par de l'anhydride maléique et d'un élastomère thermoplastique styrène-isoprène ou styrène-butadiène ou du produit hydrogéné de l'un ou l'autre de ceux-ci, est stratifiée entre le film-barrière vis-à-vis du gaz et chacune des couches à surface élastomère, et liée à ceux-ci.

11. Structure-barrière vis-à-vis du gaz pour des produits pneumatiques selon l'une quelconque des revendications précédentes, caractérisée en ce que les couches à surface élastomère sont composées d'élastomères thermoplastiques ou d'un mélange d'un élastomère thermoplastique et d'un autre élastomère synthétique ou naturel.

12. Structure-barrière vis-à-vis du gaz pour des produits pneumatiques selon la revendication 11, caractérisée en ce que les couches à surface élastomère comprennent un élastomère thermoplastique de copolymère séquencé de styrène.

13. Structure-barrière vis-à-vis du gaz pour des produits pneumatiques selon l'une quelconque des revendications précédentes, caractérisée en ce que la liaison entre les couches adjacentes dans la structure stratifiée empêche la délamination lorsque la structure est soumise à une tension correspondant à 100% d'èlongation dans toute direction.

14. Structure-barrière vis-à-vis du gaz pour des produits pneumatiques selon l'une quelconque des revendications précédentes, caractérisée en ce qu'un agent de vulcanisation est incorporé dans les couches à surface élastomère.

15. Structure-barrière vis-a-vis du gaz pour des produits pneumatiques selon la revendication 14, caractérisée en ce qu'elle est le calandrage intérieur d'un pneu sans chambre à air vulcanisé pour véhicule, dans lequel l'une des couches à surface élastomère est liée à une autre couche élastomère dans le pneu.

16. Procédé de fabrication d'une structure-barrière vis-à-vis du gaz selon l'une quelconque des revendications précédentes, caractérisé en ce que le film de polymère thermoplastique et les feuilles utilisées pour les couches à surface élastomère sont respectivement préparés par extrusion ou calandrage à l'épaisseur désirée, et les couches sont stratifiées ensemble de façon à obtenir une feuille stratifiée à trois couches.

17. Procédé de fabrication de la structure-barrière vis-à-vis du gaz selon la revendication 16, caractérisé en ce que la feuille stratifiée est soumise à une élongation en dehors de la limite d'élasticité du film de polymère thermoplastique, puis est détendue jusqu'à ses dimensions initiales, en ce qu'elle est alors incorporée dans un pneu sans chambre à air pour véhicule, et en ce que la feuille est vulcanisée avec le pneu.

18. Utilisation d'une structure-barrière vis-à-vis du gaz selon l'une quelconque des revendications 1 à 15 dans la fabrication d'un pneu sans chambre à air pour véhicule.

**19.** Pneu sans chambre à air pour véhicule contenant une structure-barrière vis-à-vis du gaz selon l'une quelconque des revendications 1 à 15.